## Europäisches Patentamt

## European Patent Office

## Office européen des brevets

(11) Veröffentlichungsnummer: **0 144 965**
**B1**

(12) **EUROPÄISCHE PATENTSCHRIFT**

(45) Veröffentlichungstag der Patentschrift:
**14.09.88**

(51) Int. Cl.⁴: **C 04 B 14/24**

(21) Anmeldenummer: **84114749.9**

(22) Anmeldetag: **04.12.84**

(54) **Putzmörtel.**

(30) Priorität: **09.12.83 DE 3344504**

(43) Veröffentlichungstag der Anmeldung:
**19.06.85 Patentblatt 85/25**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
**FR - A - 2 307 092**
**FR - A - 2 329 608**
**FR - A - 2 391 177**
**GB - A - 1 538 244**
**US - A - 3 183 107**
**US - A - 4 086 098**

(73) Patentinhaber: **quick-mix Gruppe GmbH & Co. KG,
Mühleneschweg 7, D-4500 Osnabrück (DE)**

(72) Erfinder: **Siech, Hans Joachim, Mörikestrasse 4,
D-4516 Bissendorf 1 (DE)**

(74) Vertreter: **Busse & Busse Patentanwälte,
Postfach 1226 Grosshandelsring 6, D-4500 Osnabrück
(DE)**

## Beschreibung

Die Erfindung betrifft einen Putzmörtel nach dem Oberbegriff des Anspruchs 1.

Putzmörtel der vorstehend bezeichneten Art, die in trocken gemischter Form in den Handel kommen, sind seit langem bekannt. Der Weg des Trockenmörtels ist dabei im Laufe einer langjährigen Entwicklung mit Massentransporten in Grossbehältern, maschineller pneumatischer Förderung und Speicherung in grossen Silos oder Containern rationell gestaltet. Auch am Einsatzort ist die Entnahme aus dem Silo oder Container, das Anmachen des Nassmörtels und der eigentliche Putzvorgang mit maschinellen Mitteln durchführbar und eine arbeitssparende, schnelle Verarbeitung gewährleistet.

Die bekannten maschinenverarbeitbaren Trockenmörtel haben allerdings auch signifikante Unzulänglichkeiten, die insbesondere im Hinblick auf die in jüngerer Zeit in den Vordergrund getretenen Überlegungen zum Wärmedämmverhalten von Wänden auffallen. So sind herkömmliche maschinenverarbeitbare Putzmörtel mit ungünstigen Wärmedämmwerten behaftet, da sie bei hoher Dichte relativ gute Wärmeleiter sind, was insbesondere im Hinblick auf fortschreitende Bemühungen der Steinindustrie um bessere Dämmwerte der Wände zunehmend stört. Das Temperaturdehnverhalten dieser Putze führt ausserdem zu sehr starken Spannungen gegenüber dem Mauerwerk. Überdies bewirkt die hohe Dichte herkömmlicher Putze eine geringe Ergiebigkeit, d.h., das je Tonne Trockenmörtel zu erzielende Volumen an Putz ist der Dichte entsprechend begrenzt.

Für eine bessere Wärmedämmung sind bereits ausgeprägte Dämmputze mit hohen Anteilen von dämmenden Zuschlägen wie Pelite oder Polysterolschaumkugeln entwickelt worden, die sehr gute Dämmeigenschaften und eine sehr hohe Ergiebigkeit erzielen. Diese sehr leichten Putze besitzen aber auch ausgeprägte Nachteile. Mangelnde Festigkeit und Kohärenz führen zu geringer mechanischer Widerstandsfähigkeit: Der Putz kann leicht und rasch beschädigt oder zerstört werden – zur Abhilfe wird oft ein Oberputz vorgesehen. Der Dämmputz ist aber nur bedingt geeignet, da die härtere Aussenschale mangels Abstützung zu Rissen und Ablösungen neigt, sei es infolge mechanischer Beanspruchung, bei dem sog. «falschen Festigkeitsgefälle», sei es infolge von Wärmedehnungen, wobei die hohen Dämmwerte des Leichtputzmörtels mit der Gefahr des Wärmestaus bei starkem Temperaturgefälle und insbesondere starken Temperaturschwankungen die Überbeanspruchung fördern.

Aus der FR-A-2 329 608 ist beispielsweise ein sehr leichter Isolierputz mit einem hohen Anteil an Glashohlkugeln und/oder anderen leichten Stoffen zu entnehmen.

Allgemein sind derartige Dämmputze nicht als Massengut zu transportieren und nicht ohne weiteres maschinenverarbeitbar. Der Trockenmörtel neigt dazu, sich in Leicht- und Schweranteile zu entmischen, so dass der Massentransport üblicher Art zu vermeiden ist und der umständliche und teure Weg des Vetriebs als Sackware gegangen werden muss.

Aufgabe der Erfindung ist es, einen maschinenverarbeitbaren Trockenmörtel zu schaffen, der hinsichtlich seiner Dämmeigenschaften und seiner Ergiebigkeit gegenüber herkömmlichen Trockenmörteln verbessert ist, ohne dass er dafür die Nachteile bekannter Dämmputzmörtel in Kauf zu nehmen zwingt.

Gemäss der Erfindung wird diese Aufgabe mit einem Putzmörtel nach dem Anspruch 1 gelöst. Das Schaumglas-Granulat ist dabei ein vorzugsweise ungebrochenes poriges Schaumglas einer Körnung von 0,5 bis 4 mm.

Dieser Mörtel eignet sich ohne die Gefahr einer Entmischung für den Massentransport, für die Lagerung in Grossbehältern, für das maschinelle Fördern – auch mit Hilfe von Fördergebläsen – und für das maschinelle Anmachen und Aufbringen des Frischmörtels. Das Schaumglas-Granulat verleiht dem Mörtel im trockenen wie im nassen Zustand eine Förderwilligkeit, die mutmasslich auf die gerundete Oberflächenform des ungebrochenen Granulats und auf die geringen Reibbeiwerte von Glasoberflächen zurückzuführen sind. Damit sind die in langjähriger Entwicklung geschaffenen Möglichkeiten und Vorteile des Putzmörtelvertriebs und der Putzmörtelverarbeitung auch für den erfindungsgemässen Putzmörtel zu nutzen, und zwar mit den herkömmlichen und regelmässig vorhandenen Einrichtungen und Maschinen; besondere Erfordernisse für Neuanschaffungen oder Umstellungen setzt dieser Putzmörtel nicht voraus.

Der erfindungsgemässe Putzmörtel hat eine gegenüber dem herkömmlichen maschinenverarbeitbaren Mörtel verbesserte Ergiebigkeit, die sich aus seiner mit dem Schaumglasanteil verringerten Dichte herleitet.

Der mit diesem Putzmörtel erzielbare Festmörtel besitzt gegenüber herkömmlichen maschinenverarbeitbaren Mörteln nicht nur allgemein verbesserte Dämmwerte und Temperaturdehnwerte sondern Werte, die ihn in Anpassung an übliche hochwärmedämmende Wandbaustoffe wie Ziegel- oder Gasbeton besonders geeignet erscheinen lassen. Dieser Mörtel ist diesen Wandbaustoffen in seinen Dämmwerten weitgehend angepasst. Er tritt also gegenüber diesen Wandbaustoffen weder als Wärmeleiter (wie herkömmliche maschinenverarbeitbare Putzmörtel) noch als Dämmschicht (wie herkömmliche Dämmmörtel) auf, sondern passt sich der Wand an. Dieses führt dazu, dass es bei extremen Temperaturbeanspruchungen, beispielsweise bei einem Regenschauer auf eine von der Sonne aufgeheizte Wand, ein Wärmestau in der Wand vermieder wird und stetige Temperaturverläufe in der Wand auftreten.

Diese Anpassung an die Wandbaumaterialien wird noch dadurch unterstützt, dass das Temperaturdehnverhalten des Trockenmörtels nur etwa 50% dessen der üblichen Festputzmörtel beträgt Risse und Ablösungen im Putz, die bei herkömmli-

chen Putzen nicht nur das Aussehen beeinträchtigen, sondern mit der Hinterfeuchtung von Riss- und Ablösungsbereichen auch die Dämmeigenschaften der Wand aufheben können, lassen sich mit diesem Putz sehr viel besser ausschliessen.

Gleichwohl ist der mit diesem Trockenmörtel zu erstellende Festputzmörtel von seiner Festigkeit her in der Lage, (härtere) Edelputze zu tragen (Festigkeitsgefälle), er ist andererseits infolge seines geringeren spezifischen Gewichts für den Aufbau stärkerer Putzschichten geeignet. Gegenüber Dämmputzen mit organischen Zuschlagstoffen hat dieser Putzmörtel auch bessere Brandschutzeigenschaften (Brandschutzklasse A1).

Die Verwendung von Glas in Form eines Schaumglasgranulats liefert eine vorteilhafte Zusammensetzung eines Putzmörtels, mit der traditionelle Vorbehalte der Fachwelt gegen den schwierigen und unangenehmen Werkstoff Glas durchbrochen sind.

Ausführungsbeispiel I:

Ein Trockenmörtel aus 14 Gewichtsprozenten Zement, 4 Gewichtsprozenten Kalk, vermischt mit Zuschlagstoffen aus 11 Gewichtsprozenten Schaumglas-Granulat mit einer Körnung von 1 bis 4 mm und (nach der Sieblinie) etwa 55% Kalksteinbrechsanden und etwa 15% Kalksteinmehl bildet eine trockene, lose, schüttfähige und blasfähige Masse weitestgehend homogenisierter Zusammensetzung, die sich beim Transport nicht entmischt und nach dem Anmachen mit Wasser mit bekannten Putzmaschinen verarbeitbar ist.

Zusätze im Trockenmörtel von 0,2% organischen wasserrückhaltenden Mitteln fördern nicht nur die Haftfähigkeit des angemachten Nassmörtels an der trockenen Wand und die Verarbeitbarkeit, sondern verbessern auch die Förderwilligkeit des Nassmörtels in der Putzmaschine. Noch geringere Zusätze an Plastifizierungsmitteln wie Tensiden sind in an sich bekannter Weise zum Abbau von Oberflächenspannungen und zur Einflussnahme auf die Porenbildung vorgesehen.

Weiterhin sind Stellmittel für das Standverhalten des auf eine Wand angebrachten Nassputzes in den Trockenputzmörtel trocken eingemischt. Für Aussenwände und Nasszellen-Putze sind wasserabweisende Mittel dem Trockenmörtel beigegeben.

Ausführungsbeispiel II:

Ein Trockenmörtel mit einem Bindemittelanteil aus 40% Gips und 8% Kalkhydrat enthält 12 Gewichtsprozente Schaumglas-Granulat als aufgrund seines geringen spezifischen Gewichts dominierenden Anteil und als weiteren Zuschlagstoff Quarzsand mit etwa 38 Gewichtsprozenten. Neben Zusatzmitteln wie im Ausführungsbeispiel I enthält die Zusammensetzung je nach der Gipsart und gewünschter Verzögerungszeit 0,02 bis 0,2 Gewichtsprozente eines Abbindeverzögerers.

Es hat sich gezeigt, dass Trockenmörtel nach den Ausführungsbeispielen I und II nicht nur die vorgenannten Vorteile hinsichtlich des Festigkeitsgefälles und der entsprechenden guten Verträglichkeit mit modernem Mauerwerksmaterial aufweist, der entsprechende Verputz hat sich auch als unempfindlich gegen Rissbildungen erwiesen. Mit einem relativ niedrigen Elastizitätsmodul von beispielsweise 1800 N/mm$^2$ und einem relativ geringen Wärmeausdrehungskoeffizienten $\alpha_t = 2 \times 10^{-6} \times K^{-1}$ sind die Zugspannungen im Mörtel bei Temperaturbeaufschlagung gering, so dass dieser mit einer normalen Zugfestigkeit von etwa 0,33 N/mm$^2$ auch örtlich hohe Temperaturbeaufschlagungen aufnimmt, ohne zu reissen.

**Patentansprüche**

1. Putzmörtel als Trockenmörtel für das maschinelle Fördern und/oder Putzen in einer Schaumglasgranulat und nach einer Sieblinie zusammenpassende Zuschlagstoffe und Bindemittel enthaltenden Zusammensetzung, dadurch gekennzeichnet, dass der Gewichtsanteil des Schaumglasgranulats 8 bis 20% bei einer Körnung von 1 bis 4 mm beträgt, dass es weiterhin 7 bis 15 Gewichtsprozente eines Mehls in Form von Kalksteinmehl, Trassmehl, Perlite, Quarzmehl und/oder Elektrofilterasche enthält und dass es weitere nach einer auf einen hohen Füllgrad ausgerichteten Sieblinie zum Schaumglasgranulat passende, ausschliesslich mineralische Zuschlagstoffe und einen Gewichtsanteil von 10 bis 50% eines mineralischen Bindemittels aufweist.

2. Putzmörtel nach Anspruch 1, dadurch gekennzeichnet, dass der Gewichtsanteil an Schaumglasgranulat 10% bis 12% beträgt.

3. Putzmörtel nach Anspruch 1 oder 2, dadurch gekennzeichnet, dass die Zuschlagstoffe Kalksandsteinbrechsande, Blähtonsande und/oder quarzitische Zuschlagstoffe umfassen.

4. Putzmörtel nach einem der Ansprüche 1 bis 3, dadurch gekennzeichnet, dass das Bindemittel Zement mit einem auf den Putzmörtel bezogenen Gewichtsanteil bis zu 25% umfasst.

5. Putzmörtel nach einem der Ansprüche 1 bis 5, dadurch gekennzeichnet, dass das Bindemittel Gips mit einem auf den Putzmörtel bezogenen Gewichtsanteil bis 45% umfasst.

6. Putzmörtel nach einem der Ansprüche 1 bis 5, dadurch gekennzeichnet, dass das Bindemittel Kalk mit einem auf den Putzmörtel bezogenen Gewichtsanteil von höchstens 15% enthält.

7. Putzmörtel nach den Ansprüchen 4 und 6, dadurch gekennzeichnet, dass das Bindemittel 14% Zement und 4% Kalk an Gewichtsteilen vom Mörtel aufweist.

8. Putzmörtel nach einem der Ansprüche 1 bis 7, dadurch gekennzeichnet, dass er geringe Zusätze zumindest eines wasserrückhaltenden Mittels enthält.

9. Putzmörtel nach einem der Ansprüche 1 bis 8, dadurch gekennzeichnet, dass er Zusätze eines Plastifizierungsmittels enthält.

10. Putzmörtel nach einem der Ansprüche 1 bis 9, dadurch gekennzeichnet, dass er Zusätze eines Stellmittels enthält.

11. Putzmörtel nach einem der Ansprüche 1 bis 10, dadurch gekennzeichnet, dass er Zusätze an zumindest einem wasserabweisenden Mittel enthält.

## Claims

1. A plastering mortar as ready-made mortar for mechanical conveying and/or plastering, in a composition containing granulated foamed glass as well as aggregate and binders matched according to a grading curve, characterized in that the proportion by weight of the granulated foamed glass is 8 to 20% with a range of grain sizes from 1 to 4 mm, in that it further contains 7 to 15% by weight of a powder in the form of powdered limestone, trass powder, perlite, powdered quartz and/or electrostatic-filter ash, and in that it comprises further exclusively mineral aggregate suited to the granulated foamed glass according to a grading curve adapted to a high degree of filling and a proportion by weight of 10 to 50% of a mineral binder.

2. A plastering mortar according to claim 1, characterized in that the proportion by weight of granulated foamed glass is 10% to 12%.

3. A plastering mortar according to claim 1 or 2, characterized in that the aggregate comprises crushed sand-lime brick sand, expanded-clay sand and/or quartzitic aggregate.

4. A plastering mortar according to any one of the claims 1 to 3, characterized in that the binder comprises cement with a proportion by weight of up to 25% relative to the plastering mortar.

5. A plastering mortar according to any one of the claims 1 to 5, characterized in that the binder comprises gypsum with a portion by weight of up to 45% relative to the plastering mortar.

6. A plastering mortar according to any one of the claims 1 to 5, characterized in that the binder contains lime with a proportion by weight of at most 15% relative to the plastering mortar.

7. A plastering mortar according to claims 4 and 6, characterized in that the binder comprises 14% cement and 4% lime as proportions by weight of the mortar.

8. A plastering mortar according to any one of the claims 1 to 7, characterized in that it contains small additions of at least one water-retaining agent.

9. A plastering mortar according to any one of the claims 1 to 8, characterized in that it contains additions of a plasticizing agent.

10. A plastering mortar according to any one of the claims 1 to 9, characterized in that it contains additions of a standardizing agent.

11. A plastering mortar according to any one of the claims 1 to 10, characterized in that it contains additions of at least one water-repelling agent.

## Revendications

1. Mortier d'enduit sous la forme d'un mortier sec pour le transport et/ou l'application à la machine d'une composition contenant du granulat de verre mousse et des agrégats et du liant d'une courbe granulométrique appropriée, caractérisé en ce que la teneur pondérale du granulat de verre mousse est de 8 à 20% pour une granulométrie de 1 à 4 mm, qu'il contient en outre 7 à 15% en poids d'une farine sous la forme de farine de calcaire, de farine de trass, de perlite, de farine de quartz et/ou de cendres volantes et qu'il contient d'autres agrégats exclusivement minéraux convenant pour le granulat de verre mousse suivant une courbe granulométrique ajustée à un haut degré de remplissage, ainsi qu'une fraction de 10 à 50% en poids d'un liant minéral.

2. Mortier d'enduit suivant la revendication 1, caractérisé en ce que la teneur pondérale en granulat de verre mousse est de 10% à 12%.

3. Mortier d'enduit suivant la revendication 1 ou 2, caractérisé en ce que les agrégats comprennent du sable de calcaire moulu, du sable de béton expansé et/ou des agrégats quartzeux.

4. Mortier d'enduit suivant l'une quelconque des revendications 1 à 3, caractérisé en ce que le liant comprend du ciment pour une proportion pondérale rapportée au mortier d'enduit s'élevant jusqu'à 25%.

5. Mortier d'enduit suivant l'une quelconque des revendications 1 à 4, caractérisé en ce que le liant comprend du plâtre pour une proportion pondérale rapportée au mortier d'enduit s'élevant jusqu'à 45%.

6. Mortier d'enduit suivant l'une quelconque des revendications 1 à 5, caractérisé en ce que le liant comprend de la chaux pour une proportion pondérale rapportée au mortier d'enduit de 15% au maximum.

7. Mortier d'enduit suivant les revendications 4 et 6, caractérisé en ce que le liant comprend 14% de ciment et 4% de chaux sur base pondérale du mortier.

8. Mortier d'enduit suivant l'une quelconque des revendications 1 à 7, caractérisé en ce qu'il contient de faibles additions d'au moins un agent de rétention de l'eau.

9. Mortier d'enduit suivant l'une quelconque des revendications 1 à 8, caractérisé en ce qu'il contient des additions d'un agent plastifiant.

10. Mortier d'enduit suivant l'une quelconque des revendications 1 à 9, caractérisé en ce qu'il contient des additions d'un agent de fixation.

11. Mortier d'enduit suivant l'une quelconque des revendications 1 à 10, caractérisé en ce qu'il contient des additions d'au moins un agent hydrofuge.